# EUROPÄISCHE PATENTSCHRIFT

(11) **EP 1 707 861 B1**
(45) Veröffentlichungstag und Bekanntmachung des Hinweises auf die Patenterteilung: **28.05.2008**
(21) Anmeldenummer: 06101541.8
(22) Anmeldetag: 10.02.2006
(51) Int. Cl.: F16L 13/14, B21K 1/16, B21C 37/28

(54) **Fitting und Verfahren zur Herstellung eines Fittings**
Fitting and method for manufacturing thereof
Raccord et son procédé de fabrication

(30) Priorität: 01.04.2005 DE 102005014940
(43) Veröffentlichungstag der Anmeldung: 04.10.2006
(73) Patentinhaber: VIEGA GmbH & Co. KG, 57439 Attendorn (DE)
(72) Erfinder: Viegener, Walter, 57439, Attendorn (DE); König, Manfred, 57439, Attendorn (DE)
(74) Vertreter: Cohausz & Florack

(56) Entgegenhaltungen:
- EP-A- 1 070 896
- EP-A- 1 281 456
- DE-A1- 4 336 261
- DE-A1- 19 901 990
- DE-A1- 19 954 456
- DE-C1- 3 919 496
- US-A- 2 089 784
- US-A- 6 029 487

## Beschreibung

Die vorliegende Erfindung betrifft einen Fitting für den Anschluss von Rohrleitungen, mit einem Pressanschluss, an dem eine ringförmige Aufnahme für Dicht- und/oder Halteelemente ausgebildet ist und dieser durch Kaltumformung mit einem eingesteckten Rohrende dicht verbindbar ist, und einem Gewindeanschluss, der über eine Gewindeverbindung mit einer Rohrleitung verbindbar ist, sowie ein Verfahren zur Herstellung eines Fittings.
Aus der DE 100 29 479 ist ein Verfahren zur Herstellung eines metallischen Pressfittingelementes bekannt, bei dem als Ausgangsmaterial für das Pressfittingelement ein Voll- oder Hohlstab erzeugt wird, der spanabhebend bearbeitet wird. Diese Herstellung eines Pressfittings ist relativ aufwendig, insbesondere entstehen durch die spanabhebende Bearbeitung Abfallprodukte.

Aus der DE 43 36 261 ist ein Verfahren zur Herstellung von Pressfitting bekannt, bei dem ein Rohling zunächst in einer Matrize abgelenkt wird und dann ein Stauchen des Rohlings stattfindet, damit an diversen Stellen Ringnuten ausgebildet werden. Anschließend werden die Wandabschnitte mit einer Rolle maßgenau gerollt. Mit diesem Verfahren lassen sich zwar Pressfittings für einen Pressanschluss herstellen, andere Anschlüsse sind jedoch mit diesem Verfahren nicht herzustellen.

Aus der DE 3919 496 ist ein verpressbarer Fitting bekannt, bei dem an einem gegossenen oder gepressten Grundkörper mehrere Anschlussstücke vorgesehen sind.

Diese Anschlussstücke sind als Pressabschnitte ausgebildet, die mit einem Rohrende durch Verpressen verbindbar sind, wobei die Anschlussstücke mit dem Grundkörper verklebt oder verschweißt sind. Das Fügen der Anschlusstücke an den Grundkörper zur Herstellung eines Fittings ist jedoch relativ aufwendig.

Aus der EP 1 281 456 A2 ist ferner ein Fitting nach dem Obergebriff des Anspruchs 1 bekannt. Nachteilig an diesem Stand der Technik ist, dass es in dem Bereich des Übergangs zwischen dem Mehrkant und dem Gewindeanschluss beim Anschließen einer Rohrleitung durch Verschrauben häufig zu einer Beschädigung in diesem Bereich kommt, da hier relativ große Belastungen, insbesondere aufgrund Torsion, während des Verschraubens vorliegen.

Es daher die Aufgabe der vorliegenden Erfindung, einen Fitting der zuvor beschriebenen Art und ein Verfahren zu dessen Herstellung derart weiterzubilden, dass Beschädigungen beim Herstellen der Rohrverbindung durch Verschrauben möglichst vermieden werden.

Diese Aufgabe wird mit einem Fitting mit den Merkmalen des Anspruches 1 sowie einem Verfahren mit den Merkmalen des Anspruches 5 gelöst.

Der erfindungsgemäße Fitting umfasst einen Pressanschluss, an dem eine ringförmige Aufnahme für Dicht- und/oder Halteelemente ausgebildet ist und der durch Kaltumformung mit einem eingesteckten Rohrende verbindbar ist. Ferner umfasst er einen Gewindeanschluss, der über eine Gewindeverbindung mit einer Rohrleitung verbindbar ist, wobei der Fitting einstückig durch Umformung hergestellt ist. Dadurch entfällt die Notwendigkeit, unterschiedliche Abschnitte durch Fügen, wie Kleben oder Schweißen, miteinander zu verbinden. Die unterschiedlichen Anschlusstypen durch Ausbildung eines Gewindeanschlusses und eines Pressanschlusses lassen sich durch wenige Verfahrensschritte herstellen. Durch das Umformen werden dabei je nach Bedarf die Wände verformt und verdickt, um eine entsprechende Kontur des Fittings mit nur geringem Materialeinsatz zu erhalten.

Benachbart zu dem Gewindeanschluss ist ein Mehrkant, vorzugsweise ein Sechskant, ausgebildet. Dadurch kann bei der Montage an dem Gewindeanschluss der Fitting durch bekannte Werkzeuge fixiert werden. Das Gewinde kann dabei als Innengewinde oder Außengewinde ausgebildet sein.

Der Fitting besteht vorzugsweise aus einem gut kaltumformbaren Material, wie Kupfer oder Stahl. Um eine gute Verformbarkeit zu gewährleisten, kann Kupfer mit hoher Reinheit von über 99,8 % eingesetzt werden, wie CO-DHP.

Nach dem erfindungsgemäßen Verfahren wird ein Rohrabschnitt mit Druck beaufschlagt und an einem ersten Ende zu einem Pressanschluss mit einer glattwandigen Aufnahme zum Einlegen von Dicht- und/oder Halteelementen umgeformt, und ein Mittelabschnitt unter Verdickung einzelner Bereiche zu einem rohrförmigen Mehrkant umgeformt, wobei anschließend ein Gewinde an einem zweiten Ende des Rohrabschnittes zur Ausbildung eines Fittings mit einem Pressanschluss und einem Gewindeanschluss einrolliert oder eingeschnitten wird. In dem Bereich des Gewindes kann die Wandstärke durch das Umformen zuvor ebenfalls verdickt werden, je nachdem welche Materialdicke das Ausgangsmaterial besitzt. Das Umformen kann dabei sowohl bei Raumtemperatur als auch im erwärmten Zustand erfolgen.

Vorzugsweise wird zum Umformen des Rohrabschnittes das Hydroforming-Verfahren eingesetzt, bei dem unter Druck das Umformen mit einem Fluid erfolgt. Diese besonders materialschonende Umformtechnik ermöglicht sowohl eine Konturänderung als auch eine Materialverdickung. Des weiteren kann je nach Geometrie des Bauteils auch die Kaltmassivumformung eingesetzt werden.

Die Erfindung wird nachfolgend anhand von einem Ausführungsbeispiel mit Bezug auf die beigefügten Zeichnungen näher erläutert. Es zeigen:

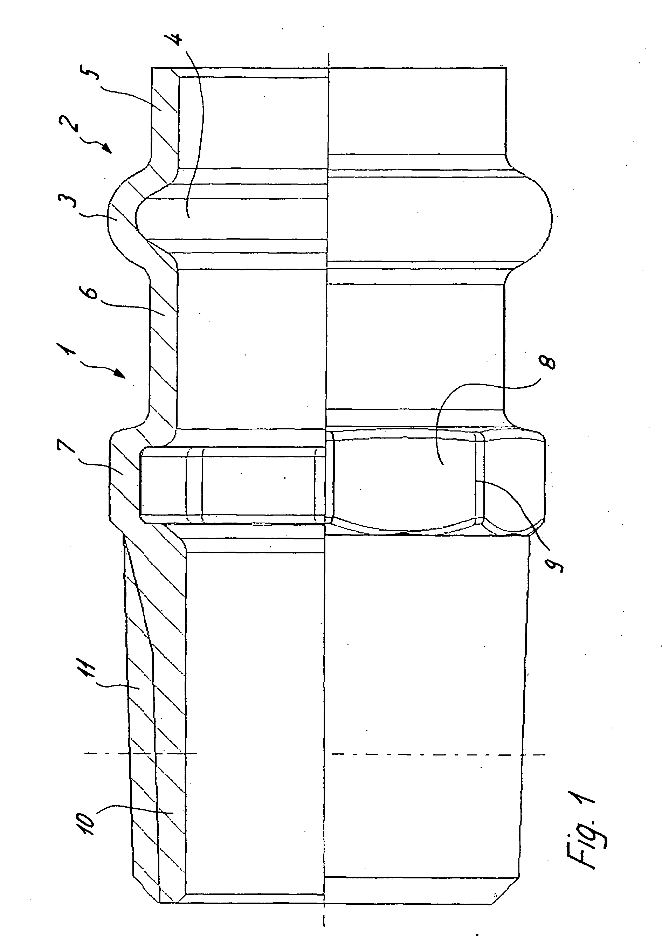

- Figur 1: ein Fitting, der nicht Teil der beanspruchten Erfindung ist, und
- Figur 2: ein Ausführungsbeispiel eines erfindungsgemäßen Fittings.

Ein Fitting 1 umfasst einen Pressanschluss 2, der einen ringförmigen nach außen hervorstehenden Wulst 3 umfasst, durch den eine offene Aufnahme 4 ausgebildet ist, in die ein Dichtring eingefügt werden kann. Endseitig an dem Pressanschluss 2 ist ein erster zylindrischer Abschnitt 5 ausgebildet und auf der zur Mitte gewandten Seite des Wulstes 3 ist ein zweiter zylindrischer Abschnitt 6 ausgebildet, die durch ein Presswerkzeug verformt werden können, um ein eingestecktes Rohrende dauerhaft mit dem Fitting 1 zu verbinden.

Der Fitting 1 umfasst an der zu dem Pressanschluss 2 gegenüberliegenden Seite einen Gewindeanschluss 10, der eine größere Materialdicke als der Pressanschluss 2 aufweist. Der Gewindeanschluss 10 besitzt ein Außengewinde 11, an dem benachbart ein Mehrkant 7 vorgesehen ist. Der Mehrkant 7 ist als Sechskant ausgebildet und umfasst am Außenumfang mehrere in einem Winkel angeordnete Flächen 8, die durch Kanten 9 voneinander beabstandet sind.

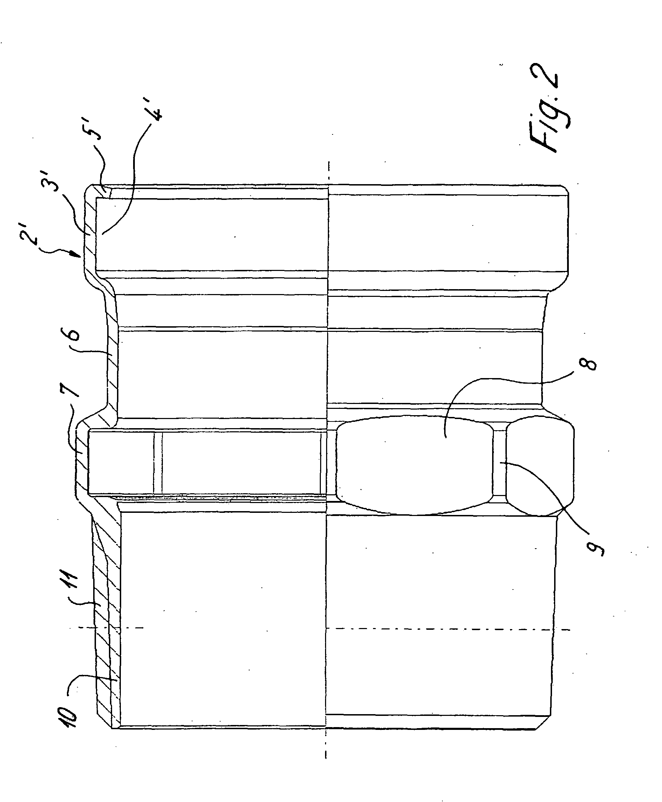

Bei dem in Figur 2 gezeigten erfindungsgemäßen Ausführungsbeispiel eines Fittings ist ein Pressanschluss 2' modifiziert ausgebildet. Der Pressanschluss 2' umfasst eine ringförmige Aufnahme 3', die im Querschnitt U-förmig ausgebildet ist und randseitig durch eine einen sich radial nach innen erstreckenden Steg 5' abgeschlossen ist. Die Aufnahme 4' ist im Wesentlichen rechteckig und dient zur Aufnahme von Dicht- und Halteelementen, wie einem Schneidring. Im Übrigen kann der Pressanschluss 2' jedoch von außen durch Presswerkzeuge radial nach innen verformt werden, um eine dauerhafte Verbindung mit einem eingesteckten Rohrende bereitzustellen.

Das Verfahren zur Herstellung der Fittings erfolgt durch Hydroforming. Hierbei wird ein Rohrabschnitt mit Druck beaufschlagt und umgeformt. Im Bereich des Pressanschlusses 2 bzw. 2' wird die entsprechende Geometrie hergestellt, wobei der Pressanschluss 2 und 2' glattwandig mit etwa gleichbleibender Wandstärke ausgebildet ist. An der gegenüberliegenden Seite wird für den Gewindeanschluss 10 und den Mehrkant 7 das Material durch Stauchen verdickt und die Mehrkantkontur erstellt. Nachdem der Rohling fertiggestellt ist, wird das Außengewinde 11 eingerollt oder eingeschnitten. Alternativ kann das Verfahren zur Herstellung auch durch Massivkaltumformung erfolgen.

In dem dargestellten Ausführungsbeispiel ist an dem Gewindeanschluss 10 ein Außengewinde 11 vorgesehen. Es ist natürlich auch möglich, ein Innengewinde vorzusehen.

Der Fitting 1 besteht vorzugsweise aus hochreinem Kupfer, wobei auch andere metallische Materialien, wie Kupferlegierungen oder Stahl eingesetzt werden können, die entsprechend umformbar sind.

## Patentansprüche

1. Fitting (1) für den Anschluss von Rohrleitungen, mit einem Pressanschluss (2,2'), an dem eine ringförmige Aufnahme (3,3') für Dicht- und/oder Halteelemente ausgebildet ist und der durch Kaltumformung mit einem eingesteckten Rohrende dicht verbindbar ist, und einem Gewindeanschluss (10), der über eine Gewindeverbindung mit einer Rohrleitung verbindbar ist, sowie benachbart zu dem Gewindeanschluss. (10) einem zu einem rohrförmigen Mehrkant (7) ausgebildeten Mittelabschnitt, wobei der Fitting (1) einstückig ist und wobei der Fitting durch Umformung aus einem Rohrabschnitt herstellbar ist, **dadurch gekennzeichnet, dass** der Mittelabschnitt mehrere vereinzelte Bereiche aufweist, die relativ zum übrigen Mittelabschnitt verdickt sind, wobei jeweils eine Verdickung im Bereich des Übergangs vom Mehrkant (7) zu den benachbarten Abschnitten vorgesehen ist und wobei einer der benachbarten Abschnitte der Gewindeanschluss (10) ist.

2. Fitting nach Anspruch 1, **dadurch gekennzeichnet, dass** der Mehrkant (7) als Sechskant ausgebildet ist.

3. Fitting nach Anspruch 1 oder 2, **dadurch gekennzeichnet, dass** der Fitting (1) aus Kupfer, Kupferlegierungen oder Stahl besteht.

4. Fitting nach einem der Ansprüche 1 bis 3, **dadurch gekennzeichnet, dass** der Fitting (1) aus Kupfer mit einer Reinheit von über 99,8 % hergestellt ist.

5. Verfahren zur Herstellung eines Fittings (1), mit den Schritten Beaufschlagen eines Rohrabschnittes mit Druck und Umformen eines ersten Endes zu einem Pressanschluss (2, 2') mit einer glattwandigen Aufnahme (3, 3') zum Einlegen von Dicht- und/oder Halteelementen und Umformen eines Mittelabschnittes unter Verdickung mehrerer vereinzelter Bereiche zu einem rohrförmigen Mehrkant (7), wobei jeweils eine Verdickung im Bereich zwischen dem Mehrkant (7) und den benachbarten Abschnitten erzeugt wird, und wobei einer der benachbarten Abschnitte ein zweites Ende des Rohrabschnittes ist, und Einrollieren oder Einschneiden eines Gewindes (11) am zweiten Ende des Rohrabschnittes zur Ausbildung eines Fittings mit einem Pressanschluss (2, 2') und einem Gewindeanschluss (10).

6. Verfahren nach Anspruch 5, **dadurch gekennzeichnet, dass** das Umformen des Rohrabschnittes durch Hydroforming erfolgt.

7. Verfahren nach Anspruch 5, **dadurch gekennzeichnet, dass** das Umformen des Rohrabschnittes durch Kaltmassivumformung erfolgt.

## Claims

1. Fitting (1) for connecting pipes together, comprising a press-fit connection (2, 2'), on which a ring-shaped seat (3, 3') for sealing and/or holding elements is created and which is sealingly connectable to an inserted pipe end by cold forming, and a threaded coupling (10), which is connectable to a pipe end by a threaded connection, and adjacent the threaded connection (10) there is a middle section in the form of a tubular polygon (7), wherein the fitting (1) is produced in a single piece by forming and wherein the fitting can be produced from a pipe section by cold forming, **characterised in that** the middle section has several individual sections which are thickened relative to the rest of the middle section, while in each case a thickening in the area of the transition from the polygon (7) to the adjacent sections is provided and where one of the adjacent sections is the threaded coupling (10).

2. Fitting according to claim 1, **characterised in that** the polygon (7) takes the shape of a hexagon.

3. Fitting according to claim 1, **characterised in that** the fitting (1) is made from copper, copper alloys or steel.

4. Fitting according to one of claims 1 to 3, **characterised in that** the fitting (1) is made from copper with a purity of over 99.8%.

5. Method for manufacturing a fitting (1), comprising the steps of pressurising a pipe section and forming a first end to create a press-fit connection (2, 2') with a smooth-walled seat (3, 3') for the insertion of sealing and/or holding elements and forming of a middle section, while thickening individual sections, to create a pipe-like polygon (7), while in each case a thickening in the area between the polygon (7) and the adjacent sections is produced, and wherein one of the adjacent sections is a second end of the pipe section and rolling in or cutting in of a thread (11) on the second end of the pipe section is used to create a fitting with a press-fit connection (2, 2') and a threaded connection (10).

6. Method according to claim 5, **characterised in that** hydroforming is used to create the pipe section.

7. Method according to claim 5, **characterised in that** cold forging is used to form the pipe section.

## Revendications

1. Raccord (1) pour raccorder des tuyauteries, comportant un raccord serti (2, 2') sur lequel est réalisé un logement (3, 3') de forme annulaire pour des éléments d'étanchéité et/ou de retenue et qui peut être relié de manière étanche, par déformation à froid, à une extrémité de tube enfoncée à l'intérieur, et avec un raccord fileté (10) qui peut être relié à une tuyauterie par une liaison filetée, ainsi qu'à côté du raccord fileté (10) un segment central réalisé sous la forme d'un polygone (7) de forme tubulaire, le raccord (1) étant d'un seul tenant et le raccord pouvant être fabriqué par déformation dans un segment de tube, **caractérisé en ce que** le segment central présente plusieurs zones séparées qui sont surépaissies par rapport au reste du segment central, une surépaisseur étant chaque fois prévue dans la zone de la transition entre le polygone (7) et les segments voisins, et l'un des segments voisins étant le raccord fileté (10).

2. Raccord selon la revendication 1, **caractérisé en ce que** le polygone (7) est réalisé sous la forme d'un hexagone.

3. Raccord selon la revendication 1 ou 2, **caractérisé en ce que** le raccord (1) est en cuivre, en alliages de cuivre ou en acier.

4. Raccord selon l'une quelconque des revendications 1 à 3, **caractérisé en ce que** le raccord (1) est fabriqué en cuivre d'une pureté supérieure à 99,8 %.

5. Procédé de fabrication d'un raccord (1) comportant les étapes suivantes : mise sous pression d'un segment de tube et déformation d'une première extrémité en un raccord serti (2, 2') avec un logement (3, 3') de paroi lisse pour y placer des éléments d'étanchéité et/ou de retenue, et déformation d'un segment central avec surépaississement de plusieurs zones séparées pour former un polygone (7) de forme tubulaire, une surépaisseur étant chaque fois produite dans la zone comprise entre le polygone (7) et les segments adjacents, et l'un des segments adjacents étant une seconde extrémité du segment de tube, et roulage ou taille d'un filetage (11) à la seconde extrémité du segment de tube pour former un raccord avec un raccord serti (2, 2') et un raccord fileté (10).

6. Procédé selon la revendication 5, **caractérisé en ce que** la déformation du segment de tube s'effectue par hydroformage.

7. Procédé selon la revendication 5, **caractérisé en ce que** la déformation du segment de tube s'effectue par façonnage massif à froid.
